# EUROPÄISCHE PATENTSCHRIFT

(11) **EP 1 044 837 B1**
(45) Veröffentlichungstag und Bekanntmachung des Hinweises auf die Patenterteilung: **18.06.2003**
(21) Anmeldenummer: 00108155.3
(22) Anmeldetag: 13.04.2000
(51) Int. Cl.: B60J 7/057, B60J 7/047

(54) **Fahrzeugdach mit einem verschiebbaren Dachelement**
Vehicle roof provided with a slidable roof element
Toit de véhicule équipé avec un élément de toit coulissant

(30) Priorität: 14.04.1999 DE 19916672; 24.07.1999 DE 19934847
(43) Veröffentlichungstag der Anmeldung: 18.10.2000
(73) Patentinhaber: CTS Fahrzeug-Dachsysteme GmbH, 21079 Hamburg (DE)
(72) Erfinder: Johe, Ralf, 74369 Löchgau (DE)
(74) Vertreter: Müller, Gottfried

(56) Entgegenhaltungen:
- EP-A- 0 577 097
- DE-C- 19 608 916
- DE-C- 19 756 020
- DE-C- 19 836 853

## Beschreibung

Die Erfindung bezieht sich auf ein Fahrzeugdach mit einem verschiebbaren Dachelement nach dem, in DE 19756020C1 offenbarten Oberbegriff des Anspruches 1.

Aus der DE 196 08 916 C1 ist ein Fahrzeugdach bekannt, das eine Mehrzahl hintereinander angeordneter, lamellenartiger Dachelemente aufweist, welche in einer Dachöffnung in seitlichen Führungsschienen in Fahrzeuglängsrichtung verschieblich gelagert sind. In Schließstellung grenzen die Dachelemente flächig aneinander und verschließen die Dachöffnung, zum Öffnen des Daches werden ein oder mehrere Dachelemente verschwenkt und in verschwenkter Position zusammengeschoben. Während der Öffnungsbewegung sind zumindest zwei benachbarte Dachelemente zusammengekoppelt, in voll ausgeschwenkter Lage sind die Dachelemente dagegen entkuppelt. Die Führung der Dachelemente in den Führungsschienen erfolgt über Führungsschlitten, die mit den Dachelementen verbunden sind und die nach dem vollständigen Ausschwenken und Entkuppeln der Dachelemente mit Hilfe von Verriegelungselementen fest mit der dachfesten Führungsschiene verriegelbar sind, indem die Verriegelungselemente in Rastöffnungen in der Führungsschiene einrasten.

Bei einem Unfall besteht die Gefahr, daß die geöffneten Dachelemente, sofern die vollständig ausgeschwenkte Position noch nicht erreicht worden ist und die Dachelemente nicht mit der Führungsschiene verriegelt sind, aufgrund der hohen Verzögerungen ruckartig nach vorne beschleunigt werden und gegen die Vorderkante der Dachöffnung bzw. gegen ein in Fahrtrichtung vorne liegendes weiteres Dachelement prallen. Gliedmaßen, die in die Dachöffnung einragen, sind in höchstem Maße gefährdet; zudem besteht die Gefahr, daß Deformierungen und Absplitterungen der Dachelemente die Fahrzeuginsassen verletzen.

Beim geschilderten Mechanismus wird die Verriegelung als kinematische Zwangsführung in Abhängigkeit der Schwenkbewegung der Dachelemente ausgeführt, so daß eine Verriegelung nur stattfindet, wenn die Dachelemente die vollständig ausgestellte Position erreichen. Falls der Verriegelungsmechanismus gestört ist, kann ein Verrasten der Verriegelungselemente in den Rastöffnungen der Führungsschiene nicht sicher gewährleistet werden, so daß im Falle einer Störung der Kinematik die Fahrzeuginsassen grundsätzlich in jeder Öffnungsstellung der Dachelemente - unabhängig von der Schwenkstellung der Dachelemente - bei einem Unfall einem erhöhten Verletzungsrisiko unterliegen.

Ein weiteres Schiebedach mit zwei in einer Dachöffnung verschieblich angeordneten Dachelementen ist aus der DE 197 56 020 C1 bekannt. Dieses Schiebedach ist mit einer Crashsicherung versehen, um im Falle eines Unfalls zu verhindern, daß Mechanikteile des Schiebedachs und anliegende Rahmenteile durch die großen Verzögerungskräfte zerstört werden, sich vom Fahrzeug lösen und zu einer Gefahr für die Fahrzeuginsassen und weitere Verkehrsteilnehmer werden. Die Crashsicherung besteht aus einem Bremsmechanismus für die Dachelemente, der als verformbarer Anschlag in der Führungsschiene der Dachelemente ausgebildet ist. Bei einem Crash treffen die Dachelemente mit hoher Geschwindigkeit auf den Anschlag auf, der einen Teil der kinetischen Energie in Verformungsarbeit umwandelt. Diese Crashsicherung führt dazu, daß im Falle eines Unfalls immer eine Zerstörung der Führungsschienen und der Dachelemente stattfindet, weil der Fahrzeugaufbau stark verzögert wird, die Dachelemente dagegen mit gleicher oder nur geringfügig verminderter Geschwindigkeit weiterbewegt werden, welche am Anschlag schlagartig abgebaut werden muß, so daß nach wie vor Verletzungsgefahr durch zerstörte Dach- oder Rahmensplitter besteht.

Aus der nachveröffentlichten Druckschrift DE 198 36 853 C1 ist eine Dachanordnung für Fahrzeuge bekannt, die eine einem Dachteil zugeordnete Fixiervorrichtung aufweist, welche bei einer oberhalb eines vorgebbaren Grenzwerts liegenden Fahrzeugverzögerung eine Bewegung des betreffenden Dachteils gegenüber seiner Führung verhindert oder zumindest abbremst. Die Fixiervorrichtung ist als drehbar gelagerter Hebel ausgebildet, der bei starken Fahrzeugverzögerungen aufgrund seiner Massenträgheit aus einer Außerfunktionsstellung in eine Blockierstellung verschwenkt wird, in der eine weitere Dachteilbewegung verhindert wird.

Nachteilig bei dieser Ausführung ist, daß der Hebel nur über eine Feder in seiner Außerfunktionsstellung gesichert ist, wodurch die Gefahr besteht, daß bereits beim Überfahren von Schlaglöchern, Bordsteinkanten oder ähnlichem ein Impuls erzeugt wird, der den Hebel in unbeabsichtigter Weise in die Blockierstellung überführt. Weiterhin ist nachteilig, daß auch die Blockierstellung des Hebels nicht gesichert ist, so daß im Falle eines Crashs die Gefahr besteht, dass der Hebel wieder in seine Außerfunktionsstellung zurückschwenken kann.

Zum allgemeinen technologischen Hintergrund wird noch auf die Druckschrift EP 0 577 097 A1 verwiesen.

Der Erfindung liegt das Problem zugrunde, bei Fahrzeugdächern mit mindestens einem in Fahrzeuglängsrichtung verschiebbaren Dachelement mit einfachen Maßnahmen das Verletzungsrisiko zu senken.

Dieses Problem wird erfindungsgemäß mit den Merkmalen des Anspruches 1 gelöst. Vorteile und zweckmäßige Ausführungsformen sind den weiteren Ansprüchen zu entnehmen.

Die erfindungsgemäß ausgebildete Sperreinrichtung wird infolge auf sie wirkender Massenkräfte als Reaktion einer Geschwindigkeitsänderung, insbesondere einer Verzögerung, von der Verschiebestellung, in der eine ungehinderte Bewegung der Dachelemente in der Führungsschiene möglich ist, in die Blockierstellung überführt, in der eine Bewegung in der Führungsschiene verhindert oder zumindest stark abgebremst wird. Ein Dachelement oder mehrere in der Führungsschiene translatorisch bewegbare Dachelemente werden durch die Sperreinrichtung wirksam abgebremst bzw. blockiert, insbesondere bereits vor Erreichen einer signifikanten Geschwindigkeit relativ zur Führungsschiene, so daß im Falle eines Crashs eine hohe Impulsübertragung, welche mit einer entsprechenden Zerstörungskraft einhergeht, vermieden werden kann.

Die Überführung von Verschiebestellung in Blockierstellung erfolgt unabhängig von einem kinematischen, auf die Dachelemente wirkenden Stellmechanismus allein unter dem Einfluß der auf die Sperreinrichtung wirkenden Massenkräfte wie Verzögerungs- oder Beschleunigungskräfte. Es besteht keine Abhängigkeit der Stellbewegung der Sperreinrichtung von der Funktionstüchtigkeit der Kinematik der Dachelemente, wodurch die Sicherheit wesentlich gesteigert wird.

In einer bevorzugten Ausführung wird die Sperreinrichtung zwar nach dem Überschreiten des Geschwindigkeitsänderungs-Grenzwerts, jedoch noch vor dem Beginn oder aber spätestens bei Beginn einer Bewegung des Dachelements, welche als Reaktion auf die auf das Fahrzeug wirkenden Massenkräfte erfolgt, in Blockierstellung versetzt. In dieser Ausführung wird eine Relativbewegung des Dachelements zum Fahrzeugaufbau und den Führungsschienen wirkungsvoll verhindert oder zumindest weitgehend gemindert, und zwar auch für den Fall, daß das Antriebskabel des Dachelements reißt, welches im intakten Zustand des Fahrzeugdaches eine kinematische Zwangsführung der Längsbewegung des Dachelements in den Führungsschienen des Fahrzeugdaches bewirkt. Demzufolge wird das Dachelement oder die Dachelemente bereits zu einem Zeitpunkt blockiert oder abgebremst, noch bevor eine hohe, unbeabsichtigte Relativbewegung zwischen Dachelement und Führungsschiene entstehen kann.

Die Blockierkräfte können sowohl unmittelbar von der Führungsschiene als auch von einem sonstigen fahrzeugfesten Bauteil aufgenommen werden. Die Sperreinrichtung ist vorteilhaft ebenso wie die Dachelemente verschieblich in der Führungsschiene gelagert, so daß eine Blockierung der Sperreinrichtung unmittelbar zur Festsetzung der Dachelemente führt.

In einer zweckmäßigen Weiterbildung ist vorgesehen, daß die Sperreinrichtung in Blockierstellung mittels Reibungseinflusses in der Führungsschiene festgesetzt ist, so daß auf Rastöffnungen in der Führungsschiene und eine entsprechende Ausgestaltung der Sperreinrichtung oder sonstiger Verriegelungselemente verzichtet werden kann. Zusätzlich zur einfacheren Ausgestaltung der Führungsschiene erhält man den Vorteil, daß die Sperreinrichtung in jeder beliebigen Lage in der Führungsschiene festgesetzt werden kann. Es ist nicht erforderlich, daß die Sperreinrichtung bestimmte, diskrete Positionen erreicht. Hierdurch wird der Bremsweg der Sperreinrichtung und auch der Bremsweg der Dachelemente verkürzt.

Es kann andererseits aber auch vorteilhaft sein, diskrete Rastpositionen für die Sperreinrichtung vorzusehen, in die die Sperreinrichtung in Blockierstellung einrastet. In dieser Ausführung wird die Sperreinrichtung in Blockierstellung formschlüssig am Fahrzeugaufbau bzw. einem fest mit dem Aufbau verbundenen Bauteil, insbesondere der Führungsschiene für das Dachelement, gehalten. Der Formschluß bieten den Vorteil, daß eine maximale Kraftübertragung möglich ist.

Die Sperreinrichtung ist bevorzugt zweiteilig aufgebaut und weist ein Führungsteil und ein relativ zum Führungsteil verstellbares Klemmteil auf, welches im regulären Betrieb in der die Bewegung der Sperreinrichtung nicht einschränkenden Verschiebestellung steht und bei Überschreiten des Geschwindigkeitsänderungs-Grenzwerts in Blockierstellung überführt wird. Durch die Aufteilung in zwei Bauelemente kann eine funktionale Trennung in ein die Gleit- bzw. Verschiebebewegung in der Führungsschiene ermöglichendes Teil und ein die Blockierung erzwingendes Teil erreicht werden, so daß die Bauelemente ihrer jeweiligen Funktion entsprechend im optimaler Weise angepaßt werden können.

Das Klemmteil, das sowohl translatorisch als auch rotatorisch als auch gemischt translatorisch/rotatorisch relativ zum Führungsteil bewegbar gehalten sein kann, wird vorzugsweise über ein Sperrglied, welches Teil der Sperreinrichtung ist, in Blockierstellung überführt und/oder in Blockierstellung gehalten. Das Sperrglied ist über Massenkräfte als Folge der Geschwindigkeitsänderung oberhalb des erlaubten Grenzwerts von einer Lösestellung, in der das Klemmteil ohne Behinderung durch das Sperrglied in Verschiebestellung steht und nur vom Dachantrieb beaufschlagt wird, in eine Arretierungsstellung, in der das Klemmteil blockiert bzw. gebremst ist, überführbar. In dieser Ausführung ist die mit dem Dachelement verbundene Sperreinrichtung dreiteilig aufgebaut und umfaßt das Führungsteil, das Klemmteil und das Sperrglied, wobei Klemmteil und Sperrglied funktional getrennt sind, indem das Sperrglied unmittelbar über die Geschwindigkeitsänderung aus der Lösestellung in die Arretierungsstellung überführt wird und in Arretierungsstellung das Klemmteil in Richtung der Blockierstellung beaufschlagt wird. Das Klemmteil kann in Richtung seiner Blockierstellung kraftbelastet sein. Das Klemmteil wird über das in Lösestellung befindliche Sperrglied vorteilhaft in Verschiebestellung gehalten; sobald das Sperrglied unter dem Eindruck der Massekräfte in Arretierstellung gelangt, wird das Klemmteil als Folge der Kraftbeaufschlagung in Blockierstellung versetzt. Die Kraftbeaufschlagung kann sowohl über ein zusätzliches Kraftglied, beispielsweise eine Feder, als auch durch das Eigengewicht des Klemmteils erfolgen. Gegebenenfalls wird das Klemmglied auch unmittelbar vom Sperrglied in Blockierstellung versetzt bzw. in Blockierstellung gehalten.

Diese funktionale Aufteilung bietet den Vorteil, daß der jeweiligen Funktion entsprechend eine optimale konstruktive Anpassung vorgenommen werden kann. Das Sperrglied wird im Falle eines Crashs bevorzugt eine Geschwindigkeitsänderung erfahren, die hauptsächlich in Fahrtrichtung gerichtet ist, und kann dementsprechend vorteilhaft in Fahrtrichtung eine Relativbewegung gegenüber dem Führungsteil ausführen, wohingegen das Klemmteil zur Kraftübertragung von dem Dachelement auf den Fahrzeugaufbau bzw. die Führungsschiene zweckmäßig eine Relativbewegung mit einer zur Bewegung des Sperrglieds senkrechten Komponente ausführen kann.

Das Sperrglied ist vorteilhaft in Richtung seiner Lösestellung insbesondere durch eine Feder kraftbeaufschlagt, wobei die Kraft zweckmäßig der bei einem Unfall entstehenden Geschwindigkeitsänderung entgegengesetzt ist, so daß über die Federparameter der Geschwindigkeitsänderungs-Grenzwert, bei. dessen Überschreitung die Längsbewegung des Dachelements blockiert wird, vorgegeben werden kann.

Am Führungsteil kann ein Anschlag vorgesehen sein, auf den das Sperrglied bei Überschreitung des Geschwindigkeitsänderungs-Grenzwerts auffährt, um die Relativbewegung des Sperrglieds zu begrenzen. Darüberhinaus wird der Vorteil erzielt, daß bei nachlassenden, auf das Sperrglied wirkenden Massekräften das Sperrglied unter dem Einfluß der Federkraft in seine ursprüngliche Position zurückfährt, wobei das Klemmteil zwischenzeitlich seine Blockierstellung eingenommen hat und nun durch das zurückgefahrene Sperrglied in der Blockierstellung festgesetzt werden kann.

Das Klemmteil ist in einer ersten bevorzugten Ausführung als verstellbarer Klemmstift ausgebildet, der insbesondere von einem als Spreizstift ausgebildeten Sperrglied beaufschlagt wird. Der Klemmstift wird bei einem Crash von dem Spreizstift verschoben und gegen den Aufbau bzw. die Führungsschiene des Dachelements gedrückt, wodurch eine die Sperreinrichtung blockierende Klemmkraft erzeugt wird.

Das Klemmteil ist in einer zweiten bevorzugten Ausführung als Arretierhebel ausgebildet, der vorteilhaft schwenkbar gelagert ist und insbesondere mit einer in Richtung seiner Blockierstellung wirkenden Kraft beaufschlagt wird, indem beispielsweise eine außerhalb des Schwerpunkts verlaufende Lagerachse vorgesehen ist, um die der Arretierhebel verschwenken kann.

Das Führungsteil weist in zweckmäßiger Ausführung eine in Fahrzeuglängsrichtung schräg verlaufende Verschiebebahn für die vorteilhaft gleitende Bewegung des Klemmteils zwischen Verschiebestellung und Blockierstellung auf. Die Verschiebebahn verläuft bevorzugt in der Weise ansteigend, daß .der der Fahrzeugvorderseite zugewandte Endabschnitt der Verschiebebahn höher liegt als der der Fahrzeugvorderseite abgewandte Endabschnitt. Das Klemmteil, das zusätzlich oder alternativ zur Ausführung als Arretierhebel oder als Klemmstift als in Längsrichtung verschieblicher Klemmkeil ausgebildet sein kann, ist in Verschiebestellung am tiefsten Punkt der Verschiebebahn in einer stabilen Position gehalten; als Reaktion einer Geschwindigkeitsänderung oberhalb des Grenzwertes verläßt das Klemmteil den tiefsten Punkt der Verschiebebahn und steigt entgegen seiner Gewichtskraft in Richtung des oberen, die Blockierstellung markierenden Endabschnitts der als insbesondere schiefe Ebene ausgebildeten Verschiebebahn an. Durch diese Ausbildung wird sichergestellt, daß im Normalfall, bei regulärem Betrieb mit in Verschieberichtung wirkenden Geschwindigkeitsänderungen unterhalb des Geschwindigkeitsänderungs-Grenzwerts, das Klemmteil in seiner tiefsten Position und somit die Sperreinrichtung in der Verschiebestellung verbleibt, wohingegen im Notfall eine sofortige Bewegungsarretierung durch Überführung des Klemmteils in Blockierstellung erzeugt wird.

An der Sperreinrichtung ist vorteilhaft ein die Überführungsbewegung in Blockierstellung dämpfendes Pufferelement vorgesehen, welches sicherstellt, daß das Klemmteil aufgrund von Vibrationen, kleinen Stößen oder ähnlichem nicht versehentlich in Blockierstellung versetzt wird. Das Pufferelement liegt insbesondere in der Bewegungsbahn zwischen Verschiebestellung und Blockierstellung und ist zweckmäßig mit dem Klemmteil verbunden.

Ausführungsbeispiele der Erfindung werden an Hand der Zeichnung näher dargestellt. Es zeigen:
- Fig. 1: eine perspektivische Ansicht auf ein Fahrzeugdach mit zwei verschiebbaren Dachelementen und einer Sperreinrichtung,
- Fig. 2: das Fahrzeugdach in Seitenansicht,
- Fig. 3: eine vergrößerte Darstellung der Sperreinrichtung in Seitenansicht,
- Fig. 4: die Sperreinrichtung in Draufsicht,
- Fig. 5: eine Ansicht von vorne auf eine Führungsschiene des Fahrzeugdaches mit eingesetzter Sperreinrichtung,
- Fig. 6: eine Sperreinrichtung in einer weiteren Ausführung, dargestellt in Verschiebestellung,
- Fig. 7: die Sperreinrichtung in Blockierstellung,
- Fig. 8: die Sperreinrichtung in Blockierstellung mit festgesetztem Arretierhebel,
- Fig. 9: eine Einzeldarstellung des Arretierhebels,
- Fig. 10: eine Seitenansicht einer Sperreinrichtung in einer weiteren Ausführung, dargestellt in Verschiebestellung,
- Fig. 11: die Sperreinrichtung aus Fig. 10 im Schnitt,
- Fig. 12: die Sperreinrichtung im Übergang zwischen Verschiebe-und Blockierstellung,
- Fig. 13: die Sperreinrichtung aus Fig. 12 im Schnitt,
- Fig. 14: die Sperreinrichtung in Blockierstellung,
- Fig. 15: die Sperreinrichtung aus Fig. 14 im Schnitt.

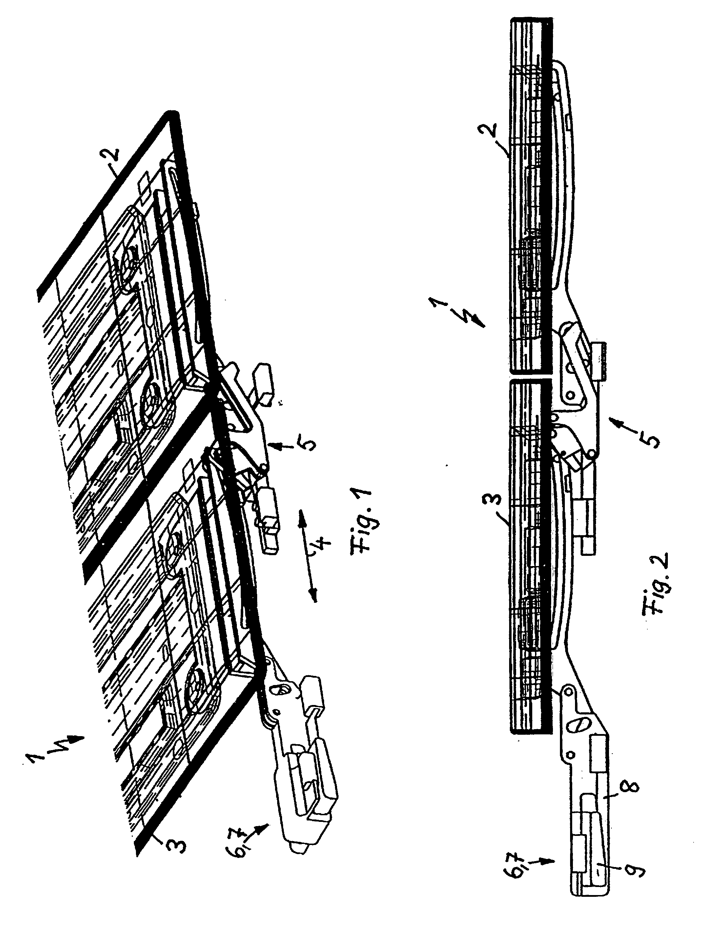

Bei den in den Fig. 1 bis 15 dargestellten Ausführungsbeispielen sind gleiche Bauteile mit gleichen Bezugszeichen versehen.

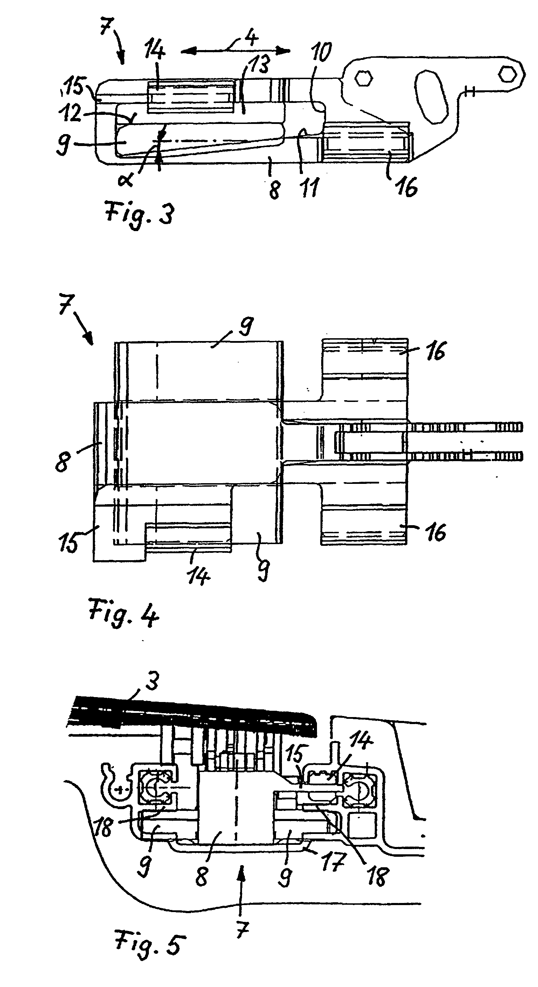

Das in Fig. 1 und 2 dargestellte Fahrzeugdach 1 für ein Fahrzeug, insbesondere ein Kraftfahrzeug, weist zwei Dachelemente 2 und 3 auf, die in Fahrzeuglängsrichtung 4 verschiebbar angeordnet sind und die zwischen einer Schließstellung, in der die Dachöffnung des Fahrzeugs geschlossen ist, und einer Offenstellung, in der die Dachöffnung zumindest teilweise geöffnet ist, verstellt werden können. Die Dachelemente 2 und 3 sind als Dachlamellen ausgebildet, die zusätzlich zur translatorischen Verschiebebewegung in Fahrzeuglängsrichtung 4 auch eine Schwenkbewegung um eine Querachse, welche in Querrichtung orthogonal zur Fahrzeuglängsrichtung 4 verläuft, ausführen können. Die Offenstellung des Fahrzeugdaches 1 kann durch Verschwenken der Dachelemente 2 und 3 um die Querachse und/oder durch translatorisches Verschieben in Fahrzeuglängsrichtung 4 erreicht werden. Die Dachelemente 2 und 3 bilden zumindest phasenweise einen Verbund, der als Einheit translatorisch verschoben werden kann. Gegebenenfalls kann dieser Verbund bei der Überführung in Offenstellung je nach Stellung der einzelnen Dachelemente 2 und 3 auch aufgehoben werden, so daß die Dachelemente unabhängig voneinander verschwenkt bzw. verschoben werden können.

Um eine translatorische Verschiebebewegung parallel zur Fahrzeuglängsrichtung 4 zu ermöglichen, sind den Dachelementen Führungsschlitten 5 bzw. 6 zugeordnet, die zu beiden Seiten des Fahrzeugs an den Dachelementen 2 und 3 zur Führung der Dachelemente in fahrzeugfesten Führungsschienen (siehe Fig. 5, Bezugszeichen 17) gleitend geführt sind. Jedem Dachelement ist jeweils ein Führungsschlitten an beiden Fahrzeugseiten zugeordnet. Der Führungsschlitten 5 zwischen den beiden aneinandergrenzenden Dachelementen 2 und 3 ermöglicht in Abhängigkeit des aktuellen Bewegungszustandes sowohl eine translatorische Zwangskopplung als auch ein unabhängiges Verschwenken der einzelnen Dachelemente 2 und 3. Gegebenenfalls sind weitere Dachelemente vor dem in Fahrtrichtung gesehen vorderen Dachelement 2 oder hinter dem nachfolgenden Dachelement 3 angeordnet.

Der Führungsschlitten 6 übernimmt zugleich die Funktion einer Sperreinrichtung 7, die in Abhängigkeit der aktuell auf das Fahrzeug wirkenden Beschleunigungs- bzw. Verzögerungskräfte zwischen einer Verschiebestellung, in der die Sperreinrichtung 7 frei verschieblich in der Führungsschiene gehalten ist, und einer Blockierstellung, in der die Bewegung der Sperreinrichtung 7 sowie der Dachelemente 2 und 3 blockiert ist, verstellbar ist. Die Sperreinrichtung 7 dient für den Fall einer sehr starken Verzögerung des Fahrzeugs als Sicherheitsbauteil zur Arretierung des aus zwei Dachelementen 2 und gebildeten Lamellenverbundes, um zu verhindern, daß die Dachelemente bei einem Unfall mit großer Wucht gegen die vordere Dachöffnungsbegrenzung prallen und eine Hand oder ein Arm eines Fahrzeuginsassen in der Dachöffnung von den Dachelementen verletzt wird. Die Sperreinrichtung 7 ist zweckmäßig so aufgebaut, daß bei Überschreitung eines auf das Fahrzeug wirkenden Verzögerungsgrenzwerts eine automatische Überführung von Verschiebestellung in Blockierstellung stattfindet. Da die Sperreinrichtung 7 im Bewegungsraum der Verschiebebewegung der Dachelemente 2 und 3 liegt, werden diese in Fahrzeuglängsrichtung 4 arretiert, sofern die Sperreinrichtung 7 in Blockierstellung steht, wodurch eine weitere Relativverschiebung der Dachelemente gegenüber dem Fahrzeug verhindert wird.

Die Sperreinrichtung kann sowohl in Fahrtrichtung hinten liegend als auch in Fahrtrichtung vorne liegend angeordnet sein. Weiterhin kann es zweckmäßig sein, eine Sperreinrichtung vorzusehen, die sowohl bei Überschreitung eines Verzögerungsgrenzwerts als auch bei Überschreitung eines Beschleunigungsgrenzwerts in Blockierstellung versetzt wird. Gegebenenfalls sind zumindest zwei auf entgegengesetzte Beschleunigungs- bzw. Verzögerungsrichtungen ansprechende Sperreinrichtungen vorgesehen.

Wie insbesondere den Darstellungen nach den Fig. 3 bis 5 5 zu entnehmen ist, besteht die Sperreinrichtung 7 7 aus einem Führungsteil 8 und einem keilförmigen Klemmteil 9. Das Führungsteil 8 dient der Führung der Sperreinrichtung 7 7 in der fahrzeugfesten Führungsschiene, das relativ zum Führungsteil 8 beweglich gehaltene Klemmteil 9 übernimmt die Funktion eines Sperrorgans, das in Abhängigkeit der aktuellen Fahrzeugverzögerung zwischen Verschiebestellung und Blockierstellung verstellt werden kann. Das Führungsteil 8 weist eine umschlossene Ausnehmung 10 auf, deren untenliegende Innenseite eine Verschiebebahn 11 bildet, auf der das Klemmteil 9 zwischen Verschiebestellung und Blockierstellung bewegt werden kann. Die Verschiebebahn 11 ist als schiefe Ebene ausgebildet, die in Richtung der Fahrzeugvorderseite - in Fig. 3 rechts liegend - ansteigt, so daß bei einer starken Verzögerung des Fahrzeugs das Klemmteil 9 aus der am tiefsten Punkt der Verschiebebahn liegenden Verschiebestellung über die schiefe Ebene nach oben bis zum Erreichen der Blockierstellung bewegt wird. Sowohl die Verschiebestellung als auch die Blockierstellung ist jeweils durch einen vertikalen Wandabschnitt des Führungsteils 8 begrenzt.

Wenn das Fahrzeug eine Verzögerung oberhalb des Verzögerungsgrenzwertes erfährt, bewegen sich die Dachelemente einschließlich der Führungsschlitten und des Führungsteils der Sperreinrichtung aufgrund der Trägheit mit der Ursprungsgeschwindigkeit des Fahrzeugs weiter, jedoch vermindert um einen Betrag, der durch die Reibung in der Führungsschiene sowie einen durch den Antrieb der Dachelemente, der plötzlichen, äußeren Geschwindigkeitsänderungen entgegenwirkt, bestimmt wird. Das Klemmteil 9 dagegen erfährt nur eine minimale Reibung in der Verschiebestellung und wird durch den Antrieb der Dachkonstruktion in keiner Weise in der Bewegung eingeschränkt. Das Klemmteil 9 behält daher weitestgehend seine ursprüngliche Geschwindigkeit bei, wohingegen das Führungsteil 8 verzögert wird, so daß das Klemmteil 9 relativ zum Führungsteil 8 eine Beschleunigung erfährt. Das Klemmteil 9 ist dadurch in der Lage, die Reibung in seiner Position am unteren Ende der Verschiebebahn 11 zu überwinden upd entgegen der Gewichtskraft die schiefe Ebene bis zum Erreichen der oberen Blockierstellung schräg nach oben zu gleiten. In der Blockierstellung verklemmt das Klemmteil 9 mit einem fahrzeugfesten Bauteil und bewirkt auf diese Weise ein Festsetzen des Führungsteils 8 sowie sämtlicher weiterer, längsverschieblich gelagerter Bauteile der Dachkonstruktion. Der Verzögerungsgrenzwert wird hierbei in erster Linie durch den Neigungswinkel α der Verschiebebahn 11 bestimmt, der im gezeigten Ausführungsbeispiel bei etwa 7° liegt. Bei einer reibungsarmen Materialpaarung kann ein größerer, bei reibungshöheren Materialpaarungen ein geringerer Neigungswinkel gewählt werden.

Das Klemmteil 9 ist keilförmig ausgebildet und verjüngt sich in ansteigender Richtung der Verschiebebahn 11. Die Keilform gleicht die Neigung der Verschiebebahn aus, so daß die Oberseite 12 des Klemmteils 9 parallel zur Führungsschiene 17 gehalten ist, in der das Führungsteil 8 verschieblich gelagert ist.

Weiterhin ist ein Schaumstoff-Pufferelement 13 vorgesehen, das oberhalb des Klemmteils 9 in der Ausnehmung 10 des Führungsteils 8 gehalten ist und insbesondere am Führungsteil 8 befestigt ist. Das Pufferelement 13 liegt in der Bewegungsbahn des Klemmteils 9 und hat einen dämpfenden Einfluß auf die Überführungsbewegung des Klemmteils 9 von Verschiebestellung in Blockierstellung, wodurch verhindert wird, daß bereits kleine Stöße oder Vibrationen zu einem unerwünschten Blockieren der Dachkonstruktion führen.

An einer Rippe 15, die am Führungsteil 8 angeformt ist und die sich nach einer Seite des Führungsteils 8 erstreckt, ist ein Gleitschuh 14 befestigt, der in einem Führungskanal der Führungsschiene 17 zur Stabilisierung der Verschiebebewegung der Sperreinrichtung 7 reibungsarm gleitend geführt ist. Darüberhinaus kommt dem Gleitschuh 14 in Blockierstellung des Klemmteils 9 auch die Funktion eines Gegenhalters zu. Gemäß Fig. 5 liegt das Klemmteil 9 in Blockierstellung an einer Oberkante 18 der Führungsschiene 17 an, wobei die Oberseite des Klemmteils aufgrund der Keilform parallel zur Oberkante 18 liegt. Um die für die Arretierung erforderliche Klemmkraft erzeugen zu können und eine plastische oder elastische Deformation der Oberkante 18 zu vermeiden, füllt der Gleitschuh 14 den Raum oberhalb der Oberkante in dem Führungskanal aus, so daß die Oberkante auch unter dem Druck des Klemmteils 9 nicht nach oben ausweichen kann.

Weitere Gleitschuhe 16 sind gemäß Fig. 4 symmetrisch zu beiden Seiten des Führungsteils 8 angeordnet.

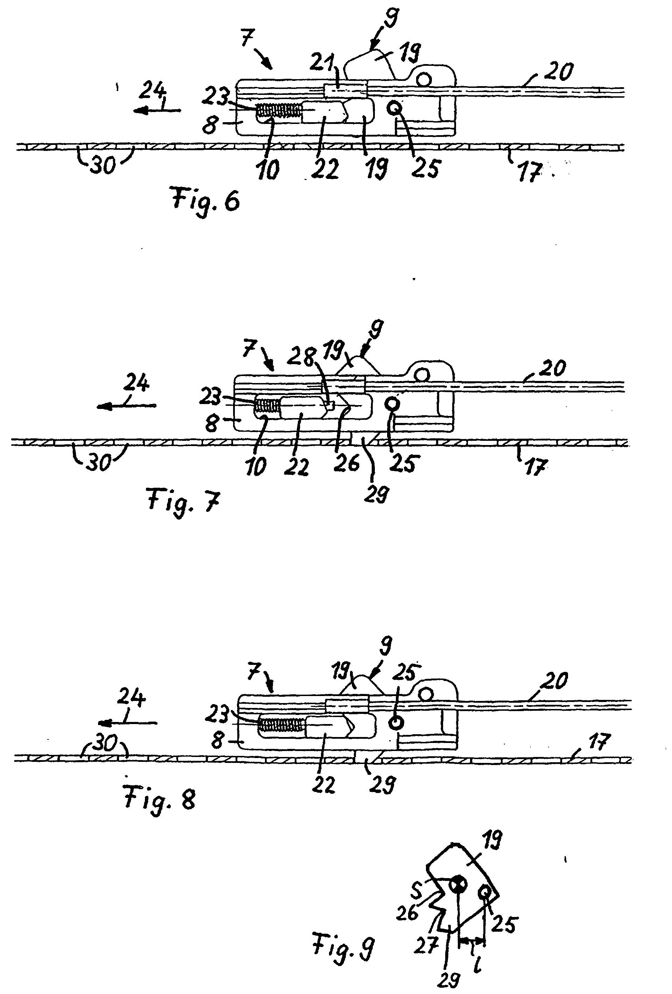

Die Fig. 6 bis 8 zeigen eine Sperreinrichtung 7 in einer weiteren Ausführung. Die Sperreinrichtung 7 ist zugleich als Führungsschlitten für ein Dachelement ausgebildet und ist über ein Antriebskabel 20, das in einer Kabelaufnahme 21 der Sperreinrichtung 7 befestigt ist, in einer mit dem Fahrzeugaufbau fest verbundenen Führungsschiene 17 längsverschieblich gehalten. Die Führungsschiene 17 weist in regelmäßigen Abständen Rastöffnungen 30 auf. Die Sperreinrichtung 7 ist mehrteilig aufgebaut und umfaßt ein Führungsteil 8, das grundsätzlich über das Antriebskabel 20 zum Öffnen und Schließen des Daches zwangsgeführt wird, sowie ein Klemmteil 9, das zwischen Verschiebestellung (Fig. 6) und Blockierstellung (Fig. 7, 8) verstellbar ist, wobei in Verschiebestellung die Bewegung des Führungsteils 8 vom Klemmteil 9 unbeeinflußt bleibt und in Blockierstellung das Klemmteil 9 in der Führungsschiene 17 blockiert wird, wodurch auch jede weitere Längsbewegung des Dachelements in der Führungsschiene 17 verhindert wird.

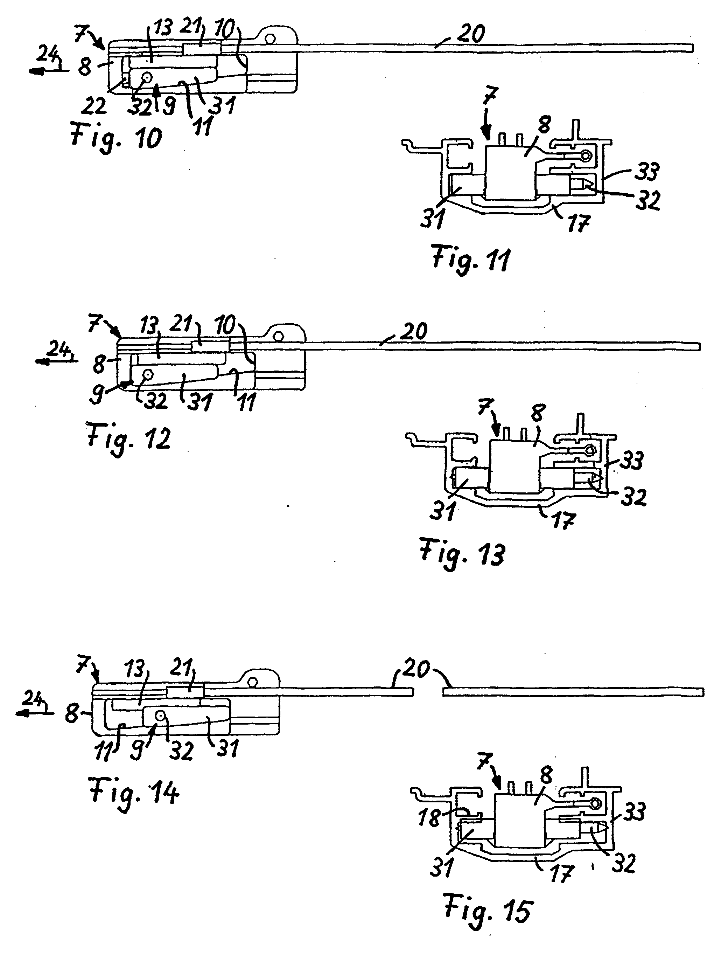

Das Klemmteil 9 ist als Arretierhebel 19 ausgebildet, der über eine Lagerachse 25 mit dem Führungsteil 8 verbunden ist und in einer die Fahrtrichtung 24 einschließenden Längsebene der Sperreinrichtung 7 verschwenkbar gehalten ist. Ein Abschnitt des Arretierhebels 19 steht mit einem Sperrglied 22 in Kontakt, das in einer Ausnehmung 10 im Führungsteil 8 beweglich, insbesondere längsverschieblich, gehalten ist und von einer entgegen zur Fahrtrichtung 24 wirkenden Rückstellfeder 23 mit einer Federkraft beaufschlagt wird. Die Lagerachse 25 des Arretierhebels 19 ist außerhalb des Arretierhebel-Schwerpunkts gelagert, wobei in der in Fig. 6 gezeigten Verschiebestellung der Schwerpunkt S des Arretierhebels mit lateralem Abstand 1 zur Lagerachse 25 angeordnet ist, so daß auf den Arretierhebel 19 ein nach unten drehendes Moment einwirkt, mit dem in Blockierstellung der Arretierhebel beaufschlagt wird, siehe hierzu die Einzeldarstellung des Arretierhebels 19 gemäß Fig. 9.

Das in Längsrichtung bewegbare Sperrglied 22 ist in der Ausnehmung 10 im Führungsteil 8 zwischen einer in Fig. 6 dargestellten Lösestellung, in der der Arretierhebel 19 sich in einer die Bewegung des Führungsschlittens nicht beeinträchtigenden Verschiebestellung befindet, und einer Arretierstellung (Fig. 7, 8) verstellbar, in der der Arretierhebel 19 in Blockierstellung steht. In Lösestellung gemäß Fig. 6 kann der Führungsschlitten und das darüber angeordnete Dachelement durch eine Bewegung des Antriebskabels 20 entlang der Führungsschiene 17 verstellt werden. Die Kraft der Rückstellfeder 23 wirkt entgegen der Fahrtrichtung 24 und hält das Sperrglied 22 in Lösestellung, wobei die Rückstellfeder 23 in der Weise dimensioniert ist, daß die im regulären Fahrbetrieb auftretenden Fahrzeugverzögerungen nicht in der Lage sind, das Sperrglied aus der Lösestellung heraus zu bewegen.

In der Lösestellung steht die der Fahrtrichtung 24 entgegengesetzte Stirnseite des Sperrglieds 22 in Kontakt mit einem in die Ausnehmung 10 einragenden Abschnitt des Arretierhebels 19. Das Sperrglied greift in eine Ausbuchtung 26 des Arretierhebels 19 ein, vergleiche Fig. 9, und hält dadurch den Arretierhebel 19 in Verschiebestellung.

Fig. 7 zeigt die Sperreinrichtung 7 im Augenblick eines Crashs. Das Antriebskabel 20 hält zunächst das Führungsteil 8 in Position in bezug auf den Fahrzeugaufbau, so daß das Führungsteil 8 zunächst die gleiche Verzögerung wie der Fahrzeugaufbau erfährt. Das Sperrglied 22 behält aufgrund seiner Längsverschieblichkeit gegenüber dem Führungsteil 8 seine Geschwindigkeit bei und wird entgegen der Kraft der Rückstellfeder 23 gegen die in Fahrtrichtung 24 vorne liegende Wandung der Ausnehmung 10 gepreßt, wodurch ein dem Arretierhebel 19 zugewandter Führungsstift 28 des Sperrglieds 22 außer Eingriff mit der Ausbuchtung 27 am Arretierhebel 19 gerät. Der nunmehr frei verschwenkbare Arretierhebel 19 dreht unter dem Einfluß seiner Gewichtskraft von der Verschiebestellung um die Lagerachse 25 in die Blockierstellung, in der ein Absatz 29 des Arretierhebels 19 in eine Rastöffnung 30 in der Führungsschiene 17 einragt, so daß der Arretierhebel 19 formschlüssig in der Führungsschiene 17 blockiert ist. Da der Arretierungshebel 19 in Fahrzeuglängsrichtung fest mit dem Führungsteil 8 und das Führungsteil 8 fest mit dem Dachelement verbunden ist, werden Führungsteil und Dachelement in ihrer Längsbewegung blockiert.

Fig. 8 zeigt die Sperreinrichtung 7 in einer auf Fig. 7 folgenden Phase des Crashs. Die ruckartige Anfangsverzögerung aus Fig. 7 hat nachgelassen, so daß die Kraft der Rückstellfeder 23 wieder in der Lage ist, das Sperrglied 22 zu beaufschlagen, das sich nach wie vor in Blockierstellung befindet. Das Sperrglied 22 greift mit seiner freien Stirnseite in die obere Ausbuchtung 26 des Arretierhebels 19 ein, wodurch die Blockierstellung des Arretierhebels 19 fixiert wird.

In den in Fig. 7 und Fig. 8 gezeigten Phasen, in denen der Arretierhebel in Blockierstellung versetzt ist, wird auch ein Reißen des Antriebskabels 20 trotz der hohen Fahrzeugverzögerung nicht zu einer Relativbewegung des Führungsteils 8 und des Dachelements gegenüber der Führungsschiene führen, so daß keine Gefahr besteht, daß das Dachelement mit großer Wucht gegen die Vorderkante der Dachöffnung prallt.

In den Fig. 10 bis 15 ist ein weiteres Ausführungsbeispiel einer Sperreinrichtung 7 dargestellt, wobei die Fig. 10 und 11 die Sperreinrichtung 7 in Verschiebestellung, die Fig. 12 und 13 den Übergang von Verschiebestellung in Blockierstellung und die Fig. 14 und 15 die Blockierstellung der Sperreinrichtung zeigen.

Die Sperreinrichtung 7 besteht aus dem Führungsteil 8, das über die Kabelaufnahme 21 fest mit dem Antriebskabel 20 verbunden ist, und dem Klemmteil 9, das einen Keil 31 und einen Klemmstift 32 umfaßt, welche beide in der Ausnehmung 10 im Führungsteil 8 angeordnet sind und eine Relativbewegung gegenüber dem Führungsteil 8 ausüben können. Der Boden der Ausnehmung 10 ist durch eine Verschiebebahn 11 gebildet, die entgegen der Fahrtrichtung 24 ansteigt und auf der der Keil 31 in Längsrichtung des Fahrzeugs verschieblich gelagert ist. Der Klemmstift 32 ist in einer Bohrung im Keil 31 gehalten, der Klemmstift 32 ist quer zur Fahrtrichtung 24 verschieblich im Keil 31 gelagert.

An der in Fahrtrichtung 24 weisenden Stirnseite des Keils 31 ist ein als Spreizstift ausgebildetes Sperrglied 22 angeordnet, das längsverschieblich in einer Längsbohrung des Keils 31 aufgenommen ist. Die Längsbohrung des Sperrglieds 22 schneidet die Achse des quer verlaufenden Klemmstifts 32, wobei die Länge des Sperrglieds 22 in der Weise bemessen ist, daß bei einem vollständig in der Längsbohrung aufgenommenem Sperrglied die Querbohrung für den Klemmstift 32 erreicht bzw. durchquert wird. Das Sperrglied 22 stößt in der in den Fig. 10, 11 gezeigten Verschiebestellung an die der Fahrtrichtung 24 zugewandte Innenwand der Ausnehmung 10, die einen Anschlag für das Sperrglied 22 bildet. In Verschiebestellung ragt ein Abschnitt des Sperrglieds 22 aus dem Keil 31 heraus und stößt an die Innenwand der Ausnehmung 10; in dieser Position wird die Querbohrung im Keil 31 vom Sperrglied 22 nicht erreicht und daher der Klemmstift 32 auch nicht vom Sperrglied 22 beaufschlagt, das Sperrglied 22 befindet sich in Lösestellung.

Wie Fig. 11 zu entnehmen, ragt der Klemmstift 32 quer zur Fahrzeuglängsrichtung aus dem Keil 31 an einer Seite des Keils heraus. Der Klemmstift weist eine kegelförmige Spitze auf, die einer Seitenwand 33 der Führungsschiene 17 zugewandt ist, in der gezeigten Verschiebestellung aber mit Abstand zur Seitenwand 33 liegt.

Die Fig. 12 und 13 zeigen eine Zwischenstellung der Sperreinrichtung 7 zwischen Verschiebestellung und Blockierstellung. Die Stirnseite des Keils 31 liegt unmittelbar an der Innenwand der Ausnehmung 10 an, so daß das Sperrglied vollständig in der Bohrung im Keil 31 aufgenommen ist. Dadurch wird der Klemmstift 32 vom Sperrglied beaufschlagt und seitlich herausgeschoben, so daß die kegelförmige Spitze des Klemmstifts 32 zur Anlage an die Seitenwand 33 der Führungsschiene 17 gelangt bzw. sich in die Seitenwand hineinbohrt und eine Klemmkraft ausübt, die eine Bewegung des Keils 31 in Fahrzeuglängsrichtung hemmt. Solange das Sperrglied den Klemmstift 32 beaufschlagt, befindet sich das Sperrglied in Arretierstellung.

In der Blockierstellung der Fig. 14 und 15 ist der Keil 31 die als schiefe Ebene ausgebildete Verschiebebahn 11 der Ausnehmung 10 vollständig hinaufgeschoben, wobei zur Dämpfung der Vertikalbewegung des Keils 31 ein Schaumstoff-Pufferelement 13 an der Oberseite der Ausnehmung 10 am Führungsteil 8 vorgesehen ist. Das Sperrglied 22 befindet sich noch in der Bohrung im Keil 31, der Klemmstift 32 liegt dementsprechend noch an der Seitenwand 33 der Führungsschiene 17 an.

Im Normalfall befindet sich die Sperreinrichtung 7 in der in Fig. 10 und 11 gezeigten Verschiebestellung, in der das Sperrglied 22 aus der Bohrung im Keil 31 ragt, der Klemmstift 32 mit Abstand zur Seitenwand 33 der Führungsschiene 17 liegt und folglich eine Bewegung der zugleich die Funktion eines Führungsschlittens übernehmenden Sperreinrichtung in der Führungsschiene nicht gehemmt wird. Im Falle eines Crashs und der dabei entstehenden extrem hohen Fahrzeugverzögerungen wird das Führungsteil 8 zunächst vom Antriebskabel 20 festgehalten. Aufgrund der zugelassenen Relativbewegung des Keils 31 gegenüber dem Führungsteil 8 wird der Keil 31 gegen die vordere Innenwand der Ausnehmung 10 gedrückt, wodurch das Sperrglied 22 in die Bohrung im Keil 31 verschoben wird und der Klemmstift 32 seitlich nach außen gegen die Seitenwand 33 gepreßt wird, was zur Folge hat, daß das gesamte Klemmteil 9 - bestehend aus Keil 31 und Klemmstift 32 - unabhängig vom Führungsteil 8 fahrzeugfest fixiert wird (Fig. 12, 13). Falls im weiteren Verlauf des Crashs das Antriebskabel 20 reißt (Fig. 14, 15), wird das Führungsteil 8 aufgrund der hohen, auf das Fahrzeug wirkenden Verzögerungskräfte wieder in Fahrtrichtung 24 beschleunigt, das Klemmteil 9 dagegen nimmt aufgrund der durch den Klemmstift 32 erzeugten Klemmkraft nicht an der Längsbewegung des Führungsteils 8 teil, sondern behält in Längsrichtung seine Position bei. Die Längsbeschleunigung des Führungsteils 8 8 relativ zum Klemmteil 9 bewirkt, daß der Keil 31 des Klemmteils 9 die schiefe Ebene der Verschiebebahn 11 vertikal nach oben gedrückt wird bis zum Erreichen der mit dem Schaumstoff-Pufferelement 13 gedämpften Oberseite der Ausnehmung 10. In dieser Position ist die Blockierstellung erreicht, in der seitliche Abschnitte des Keils 31 gegen eine Oberkante 18 der Führungsschiene 17 gedrückt werden, so daß der Keil 31 mit hoher Kraft gegenüber der Führungsschiene gebremst wird, siehe Fig. 15. Da in Blockierstellung die hintere Stirnseite des Keils 31 gegen die rückwärtige Innenwand der Ausnehmung 10 gedrückt wird, wird auch die Bewegung des Führungsteils 8 und die Bewegung des mit dem Führungsteils 8 verbundenen Dachelements blockiert.

## Patentansprüche

1. Fahrzeugdach, mit mindestens einem in Fahrzeuglängsrichtung verschiebbaren, in Führungsschienen geführten Dachelement (2 und 3) zum wahlweisen Öffnen und Verschließen einer Dachöffnung, und mit einem Bremsmechanismus zum Sichern des Dachelements (2 bzw. 3) im Falle einer einen Grenzwert übersteigenden Geschwindigkeitsänderung,
**dadurch gekennzeichnet,**
**daß** dem Bremsmechanismus eine Sperreinrichtung (7) zugeordnet ist, welche mit dem Dachelement (2 bzw. 3) verbunden ist, und welche zwischen einer Verschiebestellung und einer Blockierstellung verstellbar ist, wobei die Sperreinrichtung (7) unterhalb des Geschwindigkeitsänderungs-Grenzwerts in Verschiebestellung steht und oberhalb des Geschwindigkeitsänderungs-Grenzwerts zur Begrenzung der Verschiebebewegung des Dachelements (2 bzw. 3) in Blockierstellung versetzbar ist.

2. Fahrzeugdach nach Anspruch 1,
**dadurch gekennzeichnet,**
**daß** die Sperreinrichtung (7) nach dem Überschreiten des Geschwindigkeitsänderungs-Grenzwerts, jedoch vor dem Beginn oder bei Beginn einer durch die Geschwindigkeitsänderung hervorgerufenen Bewegung des Dachelements (2 bzw. 3) in Blockierstellung überführbar ist.

3. Fahrzeugdach nach Anspruch 1 oder 2,
**dadurch gekennzeichnet,**
**daß** die Sperreinrichtung (7) relativ zum Dachelement (2 bzw. 3) bewegbar ist.

4. Fahrzeugdach nach einem der Ansprüche 1 bis 3,
**dadurch gekennzeichnet,**
**daß** die Sperreinrichtung (7) ein Führungsteil (8) und ein relativ zum Führungsteil (8) verstellbares Klemmteil (9) aufweist, wobei das Führungsteil (8) in einer Führungsschiene (17) geführt ist und das Klemmteil (9) in Blockierstellung eine Bewegung der Sperreinrichtung (7) in der Führungsschiene (17) hemmt.

5. Fahrzeugdach nach Anspruch 4,
**dadurch gekennzeichnet,**
**daß** das Klemmteil (9) translatorisch zum Führungsteil (8) bewegbar ist.

6. Fahrzeugdach nach Anspruch 4 oder 5,
**dadurch gekennzeichnet,**
**daß** das Klemmteil (9) in Fahrzeuglängsrichtung (4) bewegbar ist.

7. Fahrzeugdach nach einem der Ansprüche 4 bis 6,
**dadurch gekennzeichnet,**
**daß** das Klemmteil (9) vertikal zur Fahrzeuglängsrichtung (4) bewegbar ist.

8. Fahrzeugdach nach einem der Ansprüche 4 bis 7,
**dadurch gekennzeichnet,**
**daß** der Sperreinrichtung (7) ein zwischen einer Lösestellung und einer Arretierstellung bewegbares Sperrglied (22) zugeordnet ist, wobei die Lösestellung der Verschiebestellung des Klemmteils (9) und die Arretierstellung der Blockierstellung des Klemmteils (9) zugeordnet ist und das Sperrglied (22) bei Überschreitung des Geschwindigkeitsänderungs-Grenzwerts zumindest kurzzeitig aus seiner Lösestellung in die Arretierungsstellung überführbar ist.

9. Fahrzeugdach nach Anspruch 8,
**dadurch gekennzeichnet,**
**daß** das Sperrglied (22) in Richtung der Lösestellung kraftbeaufschlagt ist.

10. Fahrzeugdach nach Anspruch 8 oder 9,
**dadurch gekennzeichnet,**
**daß** das Sperrglied (22) relativ zum Führungsteil (8) bewegbar ist und am Führungsteil (8) ein Anschlag zur Begrenzung der Relativbewegung des Sperrglieds (22) bei Überschreitung des Geschwindigkeitsänderungs-Grenzwerts vorgesehen ist.

11. Fahrzeugdach nach einem der Ansprüche 4 bis 10,
**dadurch gekennzeichnet,**
**daß** das Klemmteil (9) als schwenkbarer Arretierhebel (19) ausgebildet ist.

12. Fahrzeugdach nach einem der Ansprüche 4 bis 11,
**dadurch gekennzeichnet,**
**daß** das Klemmteil (9) in Richtung der Blockierstellung kraftbeaufschlagt ist.

13. Fahrzeugdach nach einem der Ansprüche 4 bis 10,
**dadurch gekennzeichnet,**
**daß** das Klemmteil (9) als verstellbarer Klemmstift (32) ausgebildet ist.

14. Fahrzeugdach nach Anspruch 13,
**dadurch gekennzeichnet,**
**daß** das Sperrglied (22) als Spreizstift ausgebildet ist, der den Klemmstift (32) beaufschlagt.

15. Fahrzeugdach nach einem der Ansprüche 4 bis 14,
**dadurch gekennzeichnet,**
**daß** das Führungsteil (8) eine Verschiebebahn (11) für die Relativbewegung des Klemmteils (9) aufweist, in der das Klemmteil (9) gleitend bewegbar gelagert ist.

16. Fahrzeugdach nach Anspruch 15,
**dadurch gekennzeichnet,**
**daß** die Verschiebebahn (11) in Fahrzeuglängsrichtung (4) ansteigend verläuft, wobei der der Fahrzeugvorderseite zugewandte Endabschnitt der Verschiebebahn (11) höher liegt als der der Fahrzeugvorderseite abgewandte Endabschnitt der Verschiebebahn (11).

17. Fahrzeugdach nach Anspruch 16,
**dadurch gekennzeichnet,**
**daß** die Neigung der Verschiebebahn (11) zwischen 1° und 20° beträgt.

18. Fahrzeugdach nach einem der Ansprüche 15 bis 17,
**dadurch gekennzeichnet,**
**daß** die Endabschnitte der Verschiebebahn (11) Anschläge für das Klemmteil bilden.

19. Fahrzeugdach nach einem der Ansprüche 15 bis 18,
**dadurch gekennzeichnet,**
**daß** das Klemmteil (9) keilförmig ausgebildet ist, wobei sich die Keilform der Neigung der Verschiebebahn (11) entsprechend verjüngt.

20. Fahrzeugdach nach einem der Ansprüche 4 bis 19,
**dadurch gekennzeichnet,**
**daß** die Führungsschiene (17) eine Oberkante (18) aufweist, wobei in Blockierstellung das Klemmteil (9) an der Oberkante (18) festgeklemmt ist.

21. Fahrzeugdach nach einem der Ansprüche 1 bis 20,
**dadurch gekennzeichnet,**
**daß** die Sperreinrichtung (7) ein Pufferelement (13) aufweist, welches in der Bewegungsbahn zwischen Verschiebestellung und Blockierstellung angeordnet ist.

22. Fahrzeugdach nach Anspruch 21,
**dadurch gekennzeichnet,**
**daß** das Pufferelement (13) am Führungsteil (8) befestigt ist.

23. Fahrzeugdach nach Anspruch 21 oder 22,
**dadurch gekennzeichnet,**
**daß** das Pufferelement (13) aus Schaumstoff besteht.

24. Fahrzeugdach nach einem der Ansprüche 4 bis 23,
**dadurch gekennzeichnet,**
**daß** die Sperreinrichtung (7) in Blockierstellung reibungsbehaftet in der Führungsschiene (17) festgesetzt ist.

25. Fahrzeugdach nach einem der Ansprüche 1 bis 23,
**dadurch gekennzeichnet,**
**daß** die Sperreinrichtung (7) in Blockierstellung formschlüssig am Fahrzeugaufbau oder einem mit dem Fahrzeugaufbau verbundenen Bauteil festgesetzt ist.

## Claims

1. Vehicle roof, having at least one roof element (2 and 3) displaceable in a vehicle longitudinal direction and guided in guide rails, for alternatively opening and closing a roof opening, and having a brake mechanism for securing the roof element (2 and 3) in the event of a speed variation exceeding a limit,
**characterized in that**
an arrester (7), which is connected to the roof element (2 and 3) and which is adjustable between a displacement position and a locking position, is assigned to the brake mechanism, the arrester (7) being in the displacement position below the speed variation limit, and in excess of the speed variation limit being moveable into the locking position in order to limit the displacement movement of the roof element (2 and 3).

2. Vehicle roof according to Claim 1,
**characterized in that**
the arrester (7) can be transported into the locking position once the speed variation limit is exceeded, but before the start or at the start of a movement of the roof element (2 and 3) caused by the speed variation.

3. Vehicle roof according to Claim 1 or 2,
**characterized in that**
the arrester (7) is moveable in relation to the roof element (2 and 3).

4. Vehicle roof according to one of Claims 1 to 3,
**characterized in that**
the arrester (7) has a guide part (8) and a clamping part (9) adjustable in relation to the guide part (8), the guide part (8) being guided in a guide rail (17), and the clamping part (9) in the locking position inhibiting a movement of the arrester (7) in the guide rail (17).

5. Vehicle roof according to Claim 4,
**characterized in that**
the clamping part (9) is capable of translational movement in relation to the guide part (8).

6. Vehicle roof according to Claim 4 or 5,
**characterized in that**
the clamping part (9) is moveable in the vehicle longitudinal direction (4).

7. Vehicle roof according to one of Claims 4 to 6,
**characterized in that**
the clamping part (9) is moveable vertically in relation to the vehicle longitudinal direction (4).

8. Vehicle roof according to one of Claims 4 to 7,
**characterized in that**
a catch member (22) moveable between a release position and an arresting position, is assigned to the arrester (7), the release position being assigned to the displacement position of the clamping part (9) and the arresting position to the locking position of the clamping part (9), and the catch member (22) on exceeding of the speed variation limit being transportable, at least briefly, from its release position into the arresting position.

9. Vehicle roof according to Claim 8,
**characterized in that**
the catch member (22) is acted upon by a force in the direction of the release position.

10. Vehicle roof according to Claim 8 or 9,
**characterized in that**
the catch member (22) is moveable relative to the guide part (8) and that a stop is provided on the guide part (8) for limiting the relative movement of the catch member (22) if the speed variation limit is exceeded.

11. Vehicle roof according to one of Claims 4 to 10,
**characterized in that**
the clamping part (9) is designed as an arresting lever (19) capable of swivelling.

12. Vehicle roof according to one of Claims 4 to 11,
**characterized in that**
the clamping part (9) is acted upon by a force in the direction of the locking position.

13. Vehicle roof according to one of Claims 4 to 10,
**characterized in that**
the clamping part (9) is designed as adjustable clamping pin (32).

14. Vehicle roof according to Claim 13,
**characterized in that**
the catch member (22) is designed as expanding pin, which acts on the clamping pin (32)

15. Vehicle roof according to one of Claims 4 to 14,
**characterized in that**
the guide part (8) has a slideway (11) for the relative movement of the clamping part (9), in which slideway the clamping part (9) is supported so that it can slide.

16. Vehicle roof according to Claim 15,
**characterized in that**
the slideway (11) ascends in the vehicle longitudinal direction (4), the end section of the slideway (11) facing the front of the vehicle being higher than the end section of the slideway (11) remote from the front of the vehicle.

17. Vehicle roof according to Claim 16,
**characterized in that**
the inclination of the slideway (11) is between 1° and 20°.

18. Vehicle roof according to one of Claims 15 to 17,
**characterized in that**
the end sections of the slideway (11) form stops for the clamping part.

19. Vehicle roof according to one of Claims 15 to 18,
**characterized in that**
the clamping part (9) is of wedge-shaped design, the wedge shape tapering according to the inclination of the slideway (11).

20. Vehicle roof according to one of Claims 4 to 19,
**characterized in that**
the guide rail (17) has an upper edge (18), the clamping part (9) in the locking position being firmly clamped to the upper edge (18).

21. Vehicle roof according to one of Claims 1 to 20,
**characterized in that**
the arrester (7) has a buffer element (13), which is arranged in the moving path between displacement position and locking position.

22. Vehicle roof according to Claim 21,
**characterized in that**
the buffer element (13) is fixed to the guide part (8).

23. Vehicle roof according to Claims 21 or 22,
**characterized in that**
the buffer element (13) is composed of foam.

24. Vehicle roof according to one of Claims 4 to 23,
**characterized in that**
the arrester (7) in the locking position is frictionally fixed in the guide rail (17).

25. Vehicle roof according to one of Claims 1 to 23,
**characterized in that**
the arrester (7) in the locking position is positively fixed to the vehicle body or to a component connected to the vehicle body.

## Revendications

1. Toit de véhicule, comprenant au moins un élément de toit (2 et 3) guidé dans des glissières de manière à pouvoir coulisser dans la direction longitudinale du véhicule, pour l'ouverture et la fermeture sélectives d'une ouverture de toit, et comprenant un mécanisme de freinage pour fixer l'élément de toit (2, respectivement 3) dans le cas d'une variation de vitesse dépassant une valeur limite,
**caractérisé en ce qu'**
un dispositif de blocage (7) est associé au mécanisme de freinage, lequel est connecté à l'élément de toit (2, respectivement 3), et est déplaçable entre une position de coulissement et une position de blocage, le dispositif de blocage (7) se trouvant sous la valeur limite de variation de vitesse dans la position de coulissement et étant déplaçable dans la position de blocage au-dessus de la valeur limite de variation de vitesse pour limiter le mouvement de coulissement de l'élément de toit (2, respectivement 3).

2. Toit de véhicule selon la revendication 1,
**caractérisé en ce que**
le dispositif de blocage (7), après que la valeur limite de variation de vitesse a été dépassée, mais toutefois avant le commencement ou au moment du commencement d'un mouvement de l'élément de toit (2, respectivement 3) provoqué par la variation de vitesse, peut passer dans la position de blocage.

3. Toit de véhicule selon la revendication 1 ou 2,
**caractérisé en ce que**
le dispositif de blocage (7) est déplaçable par rapport à l'élément de toit (2 respectivement 3).

4. Toit de véhicule selon l'une quelconque des revendications 1 à 3,
**caractérisé en ce que**
le dispositif de blocage (7) présente une partie de guidage (8) et une partie de serrage (9) déplaçable par rapport à la partie de guidage (8), la partie de guidage (8) étant guidée dans une glissière (17) et la partie de serrage (9) empêchant, dans la position de blocage, un mouvement du dispositif de blocage (7) dans la glissière (17).

5. Toit de véhicule selon la revendication 4,
**caractérisé en ce que**
la partie de serrage (9) est déplaçable en translation par rapport à la partie de guidage (8).

6. Toit de véhicule selon la revendication 4 ou 5,
**caractérisé en ce que** la partie de serrage (9) est déplaçable dans la direction longitudinale (4) du véhicule.

7. Toit de véhicule selon l'une quelconque des revendications 4 à 6,
**caractérisé en ce que**
la partie de serrage (9) est déplaçable verticalement par rapport à la direction longitudinale (4) du véhicule.

8. Toit de véhicule selon l'une quelconque des revendications 4 à 7,
**caractérisé en ce qu'**
un organe de blocage (22) déplaçable entre une position desserrée et une position d'arrêt est associé au dispositif de blocage (7), la position desserrée étant associée à la position de coulissement de la partie de serrage (9) et la position d'arrêt étant associée à la position de blocage de la partie de serrage (9) et l'organe de blocage (22) pouvant au moins brièvement passer de sa position desserrée dans la position d'arrêt lors du dépassement de la valeur limite de variation de vitesse.

9. Toit de véhicule selon la revendication 8,
**caractérisé en ce que**
l'organe de blocage (22) est sollicité par une force dans la direction de la position desserrée.

10. Toit de véhicule selon la revendication 8 ou 9,
**caractérisé en ce que**
l'organe de blocage (22) est déplaçable par rapport à la partie de guidage (8) et une butée est prévue sur la partie de guidage (8) pour limiter le mouvement relatif de l'organe de blocage (22) lors du dépassement de la valeur limite de variation de vitesse.

11. Toit de véhicule selon l'une quelconque des revendications 4 à 10,
**caractérisé en ce que**
la partie de serrage (9) est formée en tant que levier d'arrêt pivotant (19).

12. Toit de véhicule selon l'une quelconque des revendications 4 à 11,
**caractérisé en ce que**
la partie de serrage (9) est sollicitée par une force dans la direction de la position de blocage.

13. Toit de véhicule selon l'une quelconque des revendications 4 à 10,
**caractérisé en ce que**
la partie de serrage (9) est réalisée sous la forme d'une tige de serrage déplaçable (32).

14. Toit de véhicule selon la revendication 13,
**caractérisé en ce que**
l'organe de blocage (22) est réalisé en tant que tige d'écartement, qui sollicite la tige de serrage (32).

15. Toit de véhicule selon l'une quelconque des revendications 4 à 14,
**caractérisé en ce que**
la partie de guidage (8) présente une piste de coulissement (11) pour le mouvement relatif de la partie de serrage (9), dans laquelle est montée la partie de serrage (9) de manière à pouvoir se déplacer par glissement.

16. Toit de véhicule selon la revendication 15,
**caractérisé en ce que**
la piste de coulissement (11) s'étend de manière ascendante dans la direction longitudinale (4) du véhicule, la section d'extrémité de la piste de coulissement (11) tournée vers le côté avant du véhicule se trouvant plus haut que la section d'extrémité de la piste de coulissement (11) opposée au côté avant du véhicule.

17. Toit de véhicule selon la revendication 16,
**caractérisé en ce que**
l'inclinaison de la piste de coulissement (11) est comprise entre 1° et 20°.

18. Toit de véhicule selon l'une quelconque des revendications 15 à 17,
**caractérisé en ce que**
les sections d'extrémité de la piste de coulissement (11) forment des butées pour la partie de serrage.

19. Toit de véhicule selon l'une quelconque des revendications 15 à 18,
**caractérisé en ce que**
la partie de serrage (9) est réalisée en forme de clavette, la forme de clavette se rétrécissant de manière correspondant à l'inclinaison de la piste de coulissement (11).

20. Toit de véhicule selon l'une quelconque des revendications 4 à 19,
**caractérisé en ce que**
la glissière (17) présente un bord supérieur (18), la partie de serrage (9) étant serrée fixement contre le bord supérieur (18) dans la position de blocage.

21. Toit de véhicule selon l'une quelconque des revendications 1 à 20,
**caractérisé en ce que**
le dispositif de blocage (7) présente un élément tampon (13) qui est disposé dans la trajectoire de déplacement entre la position de coulissement et la position de blocage.

22. Toit de véhicule selon la revendication 21,
**caractérisé en ce que**
l'élément tampon (13) est fixé sur la partie de guidage (8).

23. Toit de véhicule selon la revendication 21 ou 22,
**caractérisé en ce que**
l'élément tampon (13) se compose de mousse.

24. Toit de véhicule selon l'une quelconque des revendications 4 à 23,
**caractérisé en ce que**
le dispositif de blocage (7) est fixé dans la position de blocage par adhérence par frottement dans la glissière (17).

25. Toit de véhicule selon l'une quelconque des revendications 1 à 23,
**caractérisé en ce que**
le dispositif de blocage (7) est fixé par engagement positif dans la position de blocage sur la carrosserie du véhicule ou sur un composant connecté à la carrosserie du véhicule.
